Europäisches Patentamt

European Patent Office

Office européen des brevets

(19)

(11) **EP 1 184 923 A2**

(12) # EUROPEAN PATENT APPLICATION

(43) Date of publication:
06.03.2002 Bulletin 2002/10

(51) Int Cl.$^7$: **H01M 8/02**

(21) Application number: **01118883.6**

(22) Date of filing: **16.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.08.2000 US 652223**

(71) Applicant: **BALLARD POWER SYSTEMS INC.
Burnaby, British Columbia V5J 5J9 (CA)**

(72) Inventors:
• **Gaulhofer, Andreas Friedrich
73230 Kirchheim unter Teck (DE)**

• **Elias, Hartmut
88690 Uhldingen-Mühlhofen (DE)**
• **Schwab, Clemens
73240 Wendlingen am Neckar (DE)**
• **Sexsmith, Michael
North Vancouver, B.C. V7K 2H3 (CA)**

(74) Representative: **Beyer, Andreas, Dr.
Wuesthoff & Wuesthoff, Patent- und
Rechtsanwälte, Schweigerstrasse 2
81541 München (DE)**

(54) **Expanded graphite fluid flow field plates and method for making such plates**

(57) Improved expanded graphite fluid flow field plates comprise an expanded graphite material having a desired area weight, abbreviated as A and typically expressed in units of g/cm$^2$. The methods for making the plates comprise forming at least one flow channel and at least one landing associated therewith in at least one major surface of the sheet, such that the web thickness of the plate is greater than A/(1.8 g/cm$^3$).

**EP 1 184 923 A2**

Printed by Jouve, 75001 PARIS (FR)

**Description**

**Field of the Invention**

The present invention relates to improved expanded graphite fluid flow field plates and methods for making such plates. The present fluid flow field plates are suitable for use in electrochemical cells, such as fuel cells, and particularly in solid polymer electrolyte fuel cells.

**Background of the Invention**

Solid polymer fuel cells employ a solid polymer electrolyte, otherwise referred to as an ion exchange membrane. The membrane is typically interposed between two electrode layers, forming a membrane electrode assembly ("MEA"). While the membrane is typically selectively proton conductive, the membrane also acts as a barrier, isolating the fuel and oxidant streams from each other on opposite sides of the MEA. The MEA is typically disposed between two plates to form a fuel cell assembly. The plates act as current collectors and provide support for the adjacent electrodes. The assembly is typically compressed to ensure effective electrical contact between the plates and the electrodes, and to ensure adequate sealing between fuel cell components. A plurality of fuel cell assemblies may be combined in series or in parallel to form a fuel cell stack. In a fuel cell stack, a plate may be shared between two adjacent fuel cell assemblies, in which case the plate also serves as a separator to fluidly isolate the fluid streams of the two adjacent fuel cell assemblies.

Fuel cell plates known as fluid flow field plates have open-faced channels formed in one or both opposing major surfaces for directing reactants and/or coolant fluids. The open-faced channels also provide passages for the removal of reaction products, depleted reactant streams, and/or heated coolant streams. For an illustration of a fluid flow field plate, see, for example, U.S. Patent No. 4,988,583 issued January 29, 1991, which is incorporated herein by reference in its entirety. Where the major surface of a fluid flow field plate faces an MEA, the open-faced channels typically direct a reactant across substantially all of the electrochemically active area of the adjacent MEA. Where the major surface of a fluid flow field plate faces another fluid flow field plate, the channels formed by their cooperating surfaces may be used for carrying coolant for controlling the temperature of the fuel cell.

Conventional methods of fabricating fluid flow field plates involve the engraving or milling of flow channels into the surface of rigid plates formed of graphitized carbon-resin composites. These methods of fabrication place significant restrictions on the minimum achievable cell thickness due to the machining process, plate permeability, and desired mechanical properties. Further, such plates are expensive, both in raw material costs and in machining costs. The machining of channels and the like into the graphite plate surfaces causes significant tool wear and involves significant processing times.

Alternatively, fluid flow field plates can be made from an electrically conductive, substantially fluid impermeable material that is sufficiently compressible or moldable so as to permit embossing. Expanded graphite sheet is generally suitable for this purpose because it is relatively impervious to typical fuel cell reactants and coolants and thus is capable of fluidly isolating the fuel, oxidant, and coolant fluid streams from each other; it is also compressible and embossing processes may be used to form channels in one or both major surfaces.

Embossing expanded graphite sheet can be problematic, however. The expanded graphite sheet material should have a suitable initial thickness and density to permit channels to be embossed in the sheet and to retain the shape of embossed features. Lower density material tends to lack mechanical strength and may not adequately retain the shape and/or strength of embossed features.
At the same time, it is important to avoid over-compressing the expanded graphite material, which can cause fractures and cracks in the plate, resulting in loss of structural integrity and increased permeability of the plate.

Prior solutions have typically embossed expanded graphite sheet having a specified average density or specified bulk density at a specified pressure to form fluid flow field plates. In some instances, the bulk density of the final product is also specified. In general, such methods are less than desirable for making such plates from expanded graphite, due to the nature of the material. Expanded graphite sheet is formed from expanded graphite particles compressed into thin sheets. The sheet comprises aligned expanded graphite particles and constituent layers of carbon atoms parallel to the surface of the sheet. It is not a flowable material in the normal sense. As a result, the density of the embossed fluid flow field plate tends to vary according to the amount of local compression of the sheet by the die. For example, the material corresponding to the raised portions of the plate will be compressed to a lesser extent than the corresponding channel material and will tend to have a lower density as a result. Depending on the geometry of the embossed features, expanded graphite sheet of a specified bulk density may result in a flow field plate lacking structural strength in some regions, or that is over-compressed in some regions, or both. Similarly, the bulk density of the flow field plate does not necessarily provide a reliable measure of its suitability.

It would be desirable to have a method for making fluid flow field plates by embossing graphite sheet materials that ensures an appropriate selection of sheet materials and design geometry in order to produce plates having adequate strength, flexibility and impermeability, as well as ensuring adequate imaging of embossed features thereon.

## Summary of the Invention

A method is provided for making a fluid flow field plate comprising at least one expanded graphite sheet having an area weight, abbreviated as A and typically expressed in units of $g/cm^2$. The method comprises forming at least one flow channel and at least one landing associated therewith in at least one major surface of the sheet, such that the web thickness of the plate is greater than $A/(1.8 \text{ g/cm}^3)$, preferably greater than $A/(1.6 \text{ g/cm}^3)$. In other words, by dividing the area weight by a predetermined value, one finds the minimum web thickness.

In addition, the method may further comprise selecting the ratio of channel depth to channel width for the channel(s) (or any of them) to be less than 1. The draft angle of the channel(s) may be any suitable angle; preferably the draft angle is at least 7 degrees, and more preferably between about 7 degrees and about 15 degrees. The method may also further comprise selecting the ratio of channel depth to landing width for the plate. This ratio may be selected based in part on the area weight of the expanded graphite sheet. In one embodiment, A is about 0.2 $g/cm^2$ and the ratio of the channel depth to landing width of said plate is less than or equal to 3. In another embodiment of the present method, A is between about 0.06 $g/cm^2$ and about 0.1 $g/cm^2$ and the ratio of the channel depth to landing width of the plate is less than or equal to 1.2. In yet another embodiment, A is about 0.07 $g/cm^2$ and the ratio of the channel depth to landing width of the plate is less than or equal to 1. In still another embodiment of the present method, A is about 0.07 $g/cm^2$ and the ratio of the channel depth to landing width of the plate is less than or equal to 0.75. In yet another embodiment, A is about 0.07 $g/cm^2$ and the ratio of the channel depth to landing width of the plate is less than or equal to 0.5.

According to the present method, flow channels and at least one landing associated therewith may be formed in both major surfaces of the sheet. The dimensions of the flow channel(s) on each major surface of the plate may be the same or different, and the dimensions of the landing(s) on each major surface of the plate may independently be the same or different, as well.

The present method as described above may also be employed using plates comprising a plurality of expanded graphite sheets having an aggregate area weight, abbreviated as $A_{sum}$ and typically expressed in units of $g/cm^2$, by forming at least one flow channel and at least one landing associated therewith in at least one major surface of the laminate plate, wherein the web thickness of the plate is greater than $A_{sum}/(1.8 \text{ g/cm}^3)$.

In the present method, the flow channel(s) may be formed by embossing the sheet, and the embossing may optionally be performed in an embossing environment at a pressure less than atmospheric pressure.

The method may further comprise impregnating the plate with an impregnant, after forming the flow channel(s). The impregnant is preferably stable, curable and capable of substantially filling the voids in the plate. Suitable impregnants include resins, such as phenols, epoxies, melamines, furans, and methacrylates, for example.

Fluid flow field plates made according to any of the methods described herein are also provided.

## Brief Description of the Drawings

FIG. 1 is a schematic illustration of a cross-section of a portion of a fluid flow field plate according to the present method.

FIG. 2 is a schematic illustration of a cross-section of a portion of another fluid flow field plate according to the present method.

## Detailed Description of Preferred Embodiment(s)

Expanded graphite has been used to make fluid flow field plates for fuel cells and for solid polymer electrolyte fuel cells in particular. Expanded graphite sheets, such as are available from Graftech Inc. (Danbury, Connecticut) under the trade designation "GRAFOIL", are available in various bulk densities and thicknesses. Prior approaches to making flow field plates typically employ embossing expanded graphite sheets of a specified bulk density at a specified pressure, or forming embossed plates having a specified bulk density. Such approaches are generally inadequate for avoiding over-compressing the plate or producing plates with structurally weak, low-density regions. The reason for this is that expanded graphite is not a flowable material in the conventional sense and upon embossing the cross-sectional density of the plate may vary with the amount of compression imposed by the embossing die. Thus, depending on the geometry of the embossed features in the plate, an expanded graphite sheet that appeared to have a suitable thickness and/or bulk density may produce landings that are not suitably dense and therefore structurally weak, dense regions near the channels containing fractures or cracks due to over-compressing, or both. Similarly, an embossed plate may have a specified bulk density and yet still have such undesirable low- or high-density regions.

In the present plate and manufacturing method, expanded graphite sheet is characterized by an area weight, abbreviated herein as A, defined by the mass of expanded graphite per unit area of the sheet. The area weight is typically expressed in units of $g/cm^2$. Of course, the material can also be characterized by a bulk density, defined as the mass of expanded graphite per unit volume of the sheet, or by sheet thickness, and these parameters may further influence choice of sheet material, plate geometry, or both. However, the area weight is employed in the present method to select design limits for embossed flow field plates made from expanded graphite sheet.

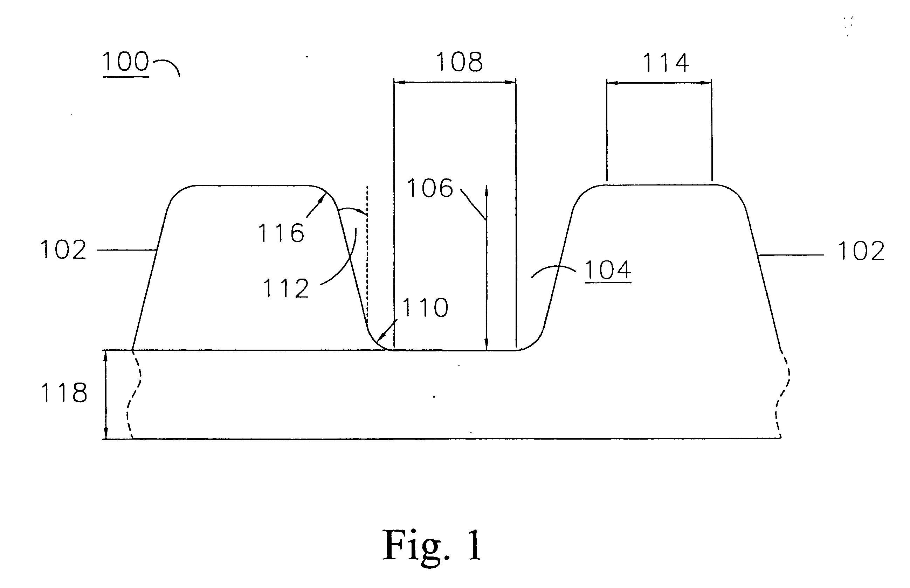

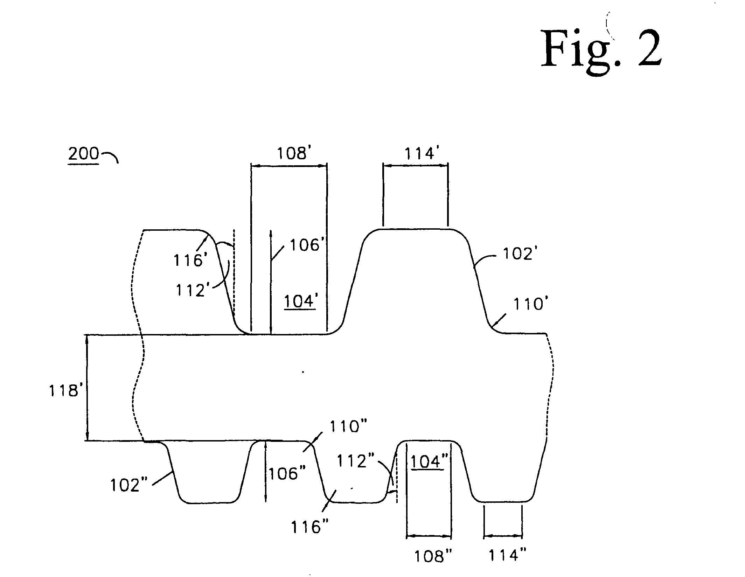

According to the present method, embossed flow field plates may be made from expanded graphite sheet of any appropriately selected thickness and bulk density, and flow channels of any suitable configuration and dimensions may be embossed therein, provided the design limit guidelines described herein are followed. FIGS. 1 and 2 illustrate the design parameters discussed in the present method.

FIGs. 1 and 2 are schematic illustrations of cross-sections of portions of fluid flow field plates according to the present method. FIG. 1 illustrates an embodiment of the present flow field plate made according to the present method having a flow channel embossed in one major surface of the expanded graphite sheet. Plate 100 comprises landings 102 and flow channel 104. Channel 104 has a depth 106, a width 108, radius 110, and the channel walls have a draft angle 112. Landing 102 has a width 114 and a radius 116. Plate 100 also has a web thickness 118 that is defined as the thinnest portion of the plate. FIG. 2 illustrates another embodiment of the present flow field plate made according to the present method having flow channels embossed in both major surfaces of the expanded graphite sheet. Features of plate 200 similar to those of plate 100 in FIG. 1 are given similar numbers.

It is well known that mechanical strength and impermeability of expanded graphite sheet, for example, increases with increasing density. Conversely, compressibility decreases with increasing density. Thus, a relatively dense sheet may be suitably strong and impermeable, but may not compress enough to form flow field channels of the desired dimensions, for example, or may be over-compressed during embossing. As another example, a less dense plate may permit the formation of deeper channels, but the landings may lack structural strength or may be undesirably impermeable. Accordingly, the choice of initial thickness and density of expanded graphite sheet is a balance between competing properties of the final flow field plate and will be dependent on the particular application.

Generally, thinner plates are preferred in order to reduce the size and weight of fuel cells, subject to structural integrity and impermeability considerations. Structural integrity and impermeability considerations tend to favor relatively high-density materials. On the other hand, over-compressing of the plate during embossing is to be avoided because over-compressing decreases the strength of the plate and increases its permeability. In order to avoid over-compressing the plate and causing fractures and cracks therein, the inventors have determined that the density of any portion of the plate should not exceed $1.8 \ g/cm^3$. This is somewhat surprising in that the theoretical density of expanded graphite is $2.2 \ g/cm^3$, yet it reaches its compressive limit at a much lower density.

In an embodiment of the present plate and manufacturing method, the web thickness, t, of the plate is chosen to reduce the risk of over-compressing the plate. This means that:

$$t > A/(1.8 \ g/cm^3)$$

By limiting the web thickness in this manner the web density (the density of the thinnest portion of the plate) should not exceed $1.8 \ g/cm^3$. The value of A may be taken at the upper limit of the specification for the expanded graphite sheet, in which case t tends to define the limit state for web thickness of suitable plate designs. Alternatively, it may be desirable to avoid approaching the limit state, in which case the web density limit may be set at $1.6 \ g/cm^3$, where $t > A/(1.6 \ g/cm^3)$. The present plates may also comprise a laminate of expanded graphite sheet layers. In this case, it is the aggregate area weight of the laminated sheets, $A_{sum}$, defined as the sum of all the area weights of the constituent expanded graphite sheets, that should be considered in determining the minimum web thickness.

In another embodiment of the present plate and manufacturing method, in addition to the foregoing web thickness limitation, the aspect ratio of the channel(s), $\alpha$, is also chosen so that the channel width (CW) exceeds the channel depth (CD). In other words,

$$CD/CW = \alpha, \text{ and } \alpha < 1 \text{ in some embodiments.}$$

Table 1 lists channel depth, channel width and aspect ratio values empirically determined for expanded graphite sheets of various area weights. The exact relationship between channel width and channel depth is not fully understood, but the aspect ratio $\alpha$ is less than 1 and is likely affected by such factors as, for example, the size of expanded graphite particles comprising the sheet and the area weight of the sheet.

Table 1

| Example | Area Weight (g/cm$^2$) | Channel Depth, CD (mm) | Channel Width, CW (mm) | Aspect Ratio (CD/CW) |
|---|---|---|---|---|
| 1 | 0.20 | 0.60 | 1.4 | 0.43 |
| 2 | | 0.30 | 0.8 | 0.38 |
| 3 | | 0.15 | 0.7 | 0.21 |
| 4 | | 0.05 | 0.4 | 0.13 |
| 5 | 0.10 | 0.60 | 1.2 | 0.50 |
| 6 | | 0.30 | 0.8 | 0.38 |
| 7 | | 0.15 | 0.6 | 0.25 |
| 8 | | 0.05 | 0.4 | 0.13 |
| 9 | 0.08 | 0.60 | 1.0 | 0.60 |
| 10 | | 0.60 | 1.2 | 0.50 |
| 11 | | 0.30 | 0.8 | 0.38 |
| 12 | | 0.15 | 0.7 | 0.21 |
| 13 | | 0.05 | 0.4 | 0.13 |
| 14 | 0.06 | 0.60 | 1.0 | 0.60 |
| 15 | | 0.30 | 0.8 | 0.38 |
| 16 | | 0.05 | 0.55 | 0.27 |
| 17 | | 0.05 | 0.4 | 0.13 |

In embossing expanded graphite sheet some draft angle (as illustrated in FIGs. 1 and 2) is preferred to allow the embossing tool to adequately separate from the plate after forming. In yet another embodiment of the present plate and manufacturing method, in addition to the foregoing web thickness limitation the draft angle is at least 7 degrees. Preferably, the draft angle is between 7 degrees and about 15 degrees. The draft angle may be greater than 15 degrees, if desired, however. In addition to the draft angle, it is important to allow for some surface roughness of the embossing tool, as expanded graphite sheet tends to stick to smooth dies. Surface roughness tends to prevent the tool from locking onto the formed plate.

The aspect ratio of the landing determines, in part, how well it forms and how strong it is. In yet another embodiment of the present plate and manufacturing method, in addition to the foregoing web thickness limitation, the aspect ratio of the landing(s), defined as the ratio of the channel depth (CD) to landing width (LW), is less than the β value for the expanded graphite sheet. In other words,

$$CD/LW < \beta$$

Table 2 lists channel depth, landing width and β values. The β values were empirically determined for expanded graphite sheets of various area weights. The β value arises in part from the grade of expanded graphite sheet and is believed to be related to the size of the constituent expanded graphite particles. The β value may be also affected by the initial density of the expanded graphite sheet and the density and degree of "skin" formed on it as a result of calendaring during the manufacturing process. The exact relationship between the β value and the foregoing characteristics is not fully understood. In general, however, the following relationships apply:

    (a) the lower the area weight of the expanded graphite sheet, the lower the value of the β limit;
    (b) the lower the initial density of the sheet, the higher the value of the β limit; and
    (c) the thinner the "skin", the higher the value of the β limit.

For example, in Table 2 the expanded sheets having an area weight of 0.07 g/cm$^2$ (Examples 21-23) each have different values for β. The lower value of β in Example 21 is likely due to the higher initial density of the sheet material compared to Examples 22 and 23. The difference in β values for Examples 22 and 23 is likely due to the difference in particle size of the constituent expanded graphite particles.

Table 2

| Example | Area Weight (g/cm²) | Initial Density (g/cm³) | Particle Size (mesh) | Limit β |
|---|---|---|---|---|
| 18 | 0.20 | 0.64 | 50 | 3 |
| 19 | 0.10 | 0.21 | 50 | 1.2 |
| 20 | 0.08 | 0.17 | 50 | 1.5 |
| 21 | 0.07 | 0.20 | 50 | 0.5 |
| 22 | 0.07 | 0.10 | 80 | 0.75 |
| 23 | 0.07 | 0.10 | < 80 | 1.0 |
| 24 | 0.06 | 0.19 | 50 | 1.2 |

In a preferred embodiment of the present plate and manufacturing method, the web thickness, channel aspect ratio and draft angle of the plate are all determined as described above; in another preferred embodiment the landing aspect ratio additionally does not exceed a limit β, as described above.

Other design elements should also be considered, as will be apparent to those skilled in the art. For example, the channel radius may be any radius that can be achieved by the embossing tool. Microstructure observations indicate that a sharp leading tool edge forms as dense a landing as a radiused one. Similarly, a large landing radius may help to form landings with a coherent shape, but effectively increases the channel width. Generally, so long as the landing aspect ratio does not exceed the β value, there is no need for a large landing radius.

In the present plate and manufacturing method, the expanded graphite sheets may be embossed by any suitable process, including stamping, roller embossing, and sheet molding, for example. In order to reduce blistering caused by air trapped within the material, it may be preferable to emboss the expanded graphite sheet in a reduced-pressure atmosphere. Further, it may be desirable to impregnate the embossed plate in order to improve characteristics such as impermeability, mechanical strength and/or conductivity. Suitable impregnants are preferably stable, curable and capable of substantially filling the voids in the plate. Known resins suitable for such purposes include phenols, epoxies, melamines, furans and methacrylates.

The plates may have flow fields embossed in one or both major surfaces thereof. Where the plates have flow fields embossed in both surfaces, the flow fields may be the same or different. For example, the flow fields could have the same or different configurations, dimensions, or both, as desired.

While particular elements, embodiments and applications of the present invention have been shown and described, it will be understood, of course, that the invention is not limited thereto since modifications may be made by those skilled in the art, particularly in light of the foregoing teachings. It is therefore contemplated that the appended claims cover such modifications that incorporate those features coming within the scope of the invention.

## Claims

1. A method for making a fluid flow field plate, said plate comprising at least one expanded graphite sheet having an area weight, abbreviated as A, said method comprising forming at least one flow channel and at least one landing associated therewith in at least one major surface of said sheet, wherein the web thickness of said plate is greater than $A/(1.8 \text{ g/cm}^3)$.

2. The method of claim 1 wherein said web thickness of said plate is greater than $A/(1.6 \text{ g/cm}^3)$.

3. The method of claim 1 wherein the ratio of channel depth to channel width for said at least one flow channel is less than 1.

4. The method of claim 1 wherein said at least one flow channel is a plurality of flow channels, and wherein for each flow channel the ratio of channel depth to channel width is less than 1.

5. The method of claim 1 wherein the draft angle of said at least one flow channel is at least 7 degrees.

6. The method of claim 1 wherein the draft angle of said at least one flow channel is between 7 degrees and 15 degrees.

7. The method of claim 1 wherein the draft angle of said at least one flow channel is at least 15 degrees.

8. The method of claim 1 wherein said at least one flow channel is a plurality of flow channels, and wherein the draft angle for each channel is at least 7 degrees.

9. The method of claim 1 wherein said at least one flow channel is a plurality of flow channels, and wherein the draft angle for each channel is between 7 degrees and 15 degrees.

10. The method of claim 1 wherein said at least one flow channel is a plurality of flow channels, and wherein the draft angle for each channel is at least 15 degrees.

11. The method of claim 1 wherein said at least one flow channel is formed by embossing said sheet.

12. The method of claim 11 wherein said sheet is embossed in an embossing environment at a pressure less than atmospheric pressure.

13. The method of claim 1 further comprising impregnating said plate with an impregnant, after forming said at least one flow channel.

14. The method of claim 13 wherein said impregnant is a resin.

15. The method of claim 14 wherein said resin is selected from phenols, epoxies, melamines, furans, and methacrylates.

16. The method of claim 1 wherein A is about 0.2 $g/cm^2$ and the ratio of the channel depth to landing width of said plate is less than or equal to 3.

17. The method of claim 1 wherein A is between about 0.06 $g/cm^2$ and about 0.1 $g/cm^2$ and the ratio of the channel depth to landing width of said plate is less than or equal to 1.2.

18. The method of claim 1 wherein A is about 0.07 $g/cm^2$ and the ratio of the channel depth to landing width of said plate is less than or equal to 1.

19. The method of claim 1 wherein A is about 0.07 $g/cm^2$ and the ratio of the channel depth to landing width of said plate is less than or equal to 0.75.

20. The method of claim 1 wherein A is about 0.07 $g/cm^2$ and the ratio of the channel depth to landing width of said plate is less than or equal to 0.5.

21. The method of claim 1 comprising forming at least one flow channel and at least one landing associated therewith in both major surfaces of said sheet.

22. The method of claim 21 wherein the dimensions of said at least one flow channel in one of said major surfaces are different from the dimensions of said at least one flow channel in the other of said major surfaces.

23. The method of claim 21 wherein the dimensions of said at least one landing in one of said major surfaces is different from the dimensions of said at least one landing in the other of said major surfaces.

24. The method of claim 1 wherein said plate comprises a plurality of expanded graphite sheets having an aggregate area weight, abbreviated as $A_{sum}$, said method comprising forming at least one flow channel and at least one landing associated therewith in at least one major surface of said plate, wherein the web thickness of said plate is greater than $A_{sum}/(1.8\ g/cm^3)$.

25. The method of claim 24 comprising forming at least one flow channel and at least one landing associated therewith in both major surfaces of said plate.

**26.** The method of claim 25 wherein the dimensions of said at least one flow channel in one of said major surfaces is different from the dimensions of said at least one flow channel in the other of said major surfaces.

**27.** The method of claim 25 wherein the dimensions of said at least one landing in one of said major surfaces is different from the dimensions of said at least one landing in the other of said major surfaces.

**28.** A fluid flow field plate made according to the method of any one of claims 1-27.

Fig. 1

EP 1 184 923 A2

# Fig. 2